# EUROPEAN PATENT SPECIFICATION

(11) **EP 2 040 901 B1**
(45) Date of publication and mention of the grant of the patent: **18.06.2014**
(21) Application number: 07748297.4
(22) Date of filing: 02.07.2007
(51) Int. Cl.: B29C 45/66, B29C 45/56, B29C 45/14

(54) **INJECTION MOULDING MECHANISM**
SPRITZGIESSMECHANISMUS
MÉCANISME DE MOULAGE PAR INJECTION

(30) Priority: 05.07.2006 SE 0601470
(43) Date of publication of application: 01.04.2009
(73) Proprietor: Tetra Laval Holdings & Finance S.A., 1009 Pully (CH)
(72) Inventor: ANDERSSON, Pär, 227 38 Lund (SE); MYLLYKANGAS, Fredrik, 451 94 Uddevalla (SE)
(74) Representative: Tetra Pak - Patent Attorneys SE
(86) International application number: PCT/SE2007/000638
(87) International publication number: WO 2008/004939

(56) References cited:
- WO-A1-02/055283
- US-A- 3 830 614
- US-A- 4 900 242
- US-A1- 2002 018 826
- US-A1- 2005 109 229
- US-A1- 2005 109 229

## Description

### Technical Field

The present invention concerns an injection moulding mechanism. The injection moulding mechanism has been developed for moulding of a thermoplastic top on the edge of a sleeve of paper laminate.

### Prior Art

The present invention is developed for use with the injection moulding technique known as injection compression. In injection compression a partly closed mould is partly filled in a first step. Then the mould is completely closed giving a compression force on the material inside the mould, which material will fill up the mould due to the compression. Movements to close the mould and to give the compression force are often given by means of a hydraulic cylinder and some kind of link mechanism. In one known device the second step, giving the compression force, is accomplished in that a link system is given a straight orientation. In practice it has been shown that the previously used mechanisms have been difficult to control in an exact manner and in some cases there has been registered a potential risk for deformations instead of a suitable compression.

The document US 2005/109229 discloses a press mechanism, alternatively a clamp mechanism, for use in a moulding machine by which highly accurate parallelism of a press plate can be maintained and the position and pressure of the press plate can be controlled with high accuracy. Such a document discloses an injection moulding mechanism in accordance with the preamble of claim 1.

### Summary of the Invention

One object of the present invention is to have a simple and yet reliable mechanism, giving a partly closed mould in a first step and a closed mould and compression force in a second step. Furthermore, the mechanism should be possible to control in a precise manner. A further object is to have a process that is repeatable in giving the same result. Still a further object is that the cycle time to produce one component should be relatively short.

The above objects are achieved by an injection moulding mechanism in accordance with claim 1, i.e. an extruder comprising an extruder, an inner mould part and an outer mould part. It further comprises a first mechanism to partly close the mould and a second mechanism to close the mould and compress the extruded material inside the mould. One of the mould parts is arranged moveable towards the other mould part to form a mould cavity. At least one of the mould parts has a channel, opening into the mould cavity and connected to the extruder. The first mechanism, to partly close the mould, has a knee mechanism driven by a servo-motor. The second mechanism, to close and compress the extruded material inside the mould, has an eccentric being a part of the shaft of a second servo-motor. The knee mechanism is formed of three pivotable arms of which a first pivotable arm at one end is connected by means of a first pivot axle to a disc rotated by the first servo-motor and at the other end by a second pivot axle (19) to one end of the second pivotable arm, the second pivotable arm being connected at its other end by means of a third pivot axle to a frame carrying the outer mould part and the third pivotable arm being connected at one end to the second pivot axle, also connecting the first and second pivotable arms and at the other end being connected to a shaft of the second servo-motor.

By using servo-motors it is possible to have an exact control, as servo-motors as such can be controlled in an exact way. In that a small eccentric movement is given by a relatively large rotation of a servo-motor the possibility for exact control is improved further. It also facilitates giving exactly the desired movement needed in each specific case. The movement needed may e.g. be monitored by means of different sensors. Furthermore, the inherent elasticity of the mechanism will assist in taking up parts of the compression force used.

Further objects and advantages of the present invention will be obvious to a person skilled in the art when reading the detailed description below of at present preferred embodiments.

### Brief Description of the Drawings

The invention will be described further below by way of an example and with reference to the enclosed schematic drawings. In the drawings:
Fig. 1 is a sectional view of a mould used in a mechanism according to the present invention and indicating a position during one step of a working cycle,
Fig. 2 is a side view of an injection moulding mechanism, according to the present invention, in a step of starting closing of the mould,
Fig. 3 is a view according to Fig. 2 but showing a step of finishing closing of the mould,
Fig. 4 is a view according to Fig. 2 but showing a step of compressing the mould with the second mechanism of the invention, and
Fig. 5 is a view according to Fig. 2, but showing a different embodiment of the injection compression mechanism according to the present invention.

### Detailed Description of Preferred Embodiments

The mechanism shown in the Figs. has a mould, having an inner mould part 1 and an outer mould part 2. The outer mould part 2 has one or more channels 3 for receiving extruded plastic material and is arranged movable in relation to the inner mould part 1. In the shown embodiment the inner mould part 1 has the form of a mandrel placed on a mandrel wheel 4, having five mandrels. In other embodiments other numbers of mandrels may be placed on the mandrel wheel. The mandrels are placed projecting radially outwards on the mandrel wheel 4. The mandrel wheel 4 is provided to rotate intermittently on a shaft, in such away that the mandrels are placed one at the time in a correct position opposite the outer mould part 2.

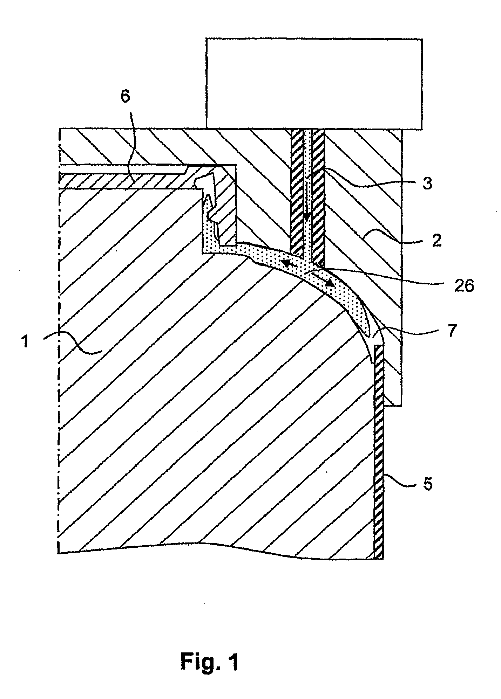

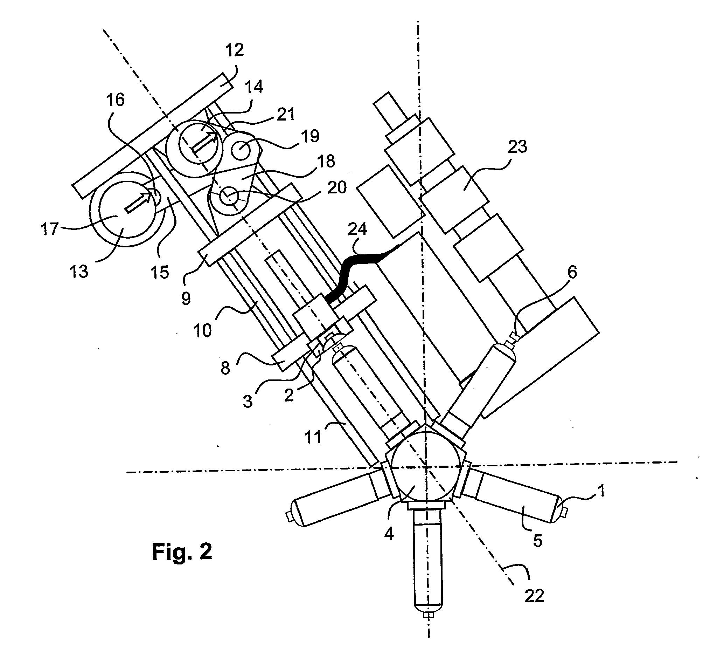

In the example in Fig. 2 a sleeve 5 of paper laminate is placed together with a cap 6 on a mandrel in successive steps, which mandrel forms the inner mould part 1. The inner mould part 1 is then placed in-line with the outer mould part 2. When the inner and outer mould parts 1, 2 are brought together, see Fig. 1, a mould cavity 7 is formed between them. The channel(s) 3 of the outer mould part 2 opens into the mould cavity 7.

In Fig. 2 it can be seen that the outer mould part 2 is mounted on a moveable frame having a lower plate 8 and an upper plate 9, which lower and upper plates 8, 9 are held together a by means of a number of rods 10. The plates 8, 9 are arranged at a distance from each other to give room for parts of the injection moulding mechanism. The outer mould part 2 is mounted on the lower plate 8. The frame, formed of the lower and upper plates 8, 9 and the rods 10, is arranged movable on rails 11.

On top of the rails 11 a support 12 is fixed, which support 12 holds a first servo-motor 13 and a second servo-motor 14. A first pivotable arm 15 is connected to the servo-motor by means of a first pivot axle 16, arranged eccentric on a disc 17, in that it is placed at a distances from the rotation axis of the disc 17. The disc 17 is rotated by the first servo-motor 13. The first pivotable arm 15 is connected to a second pivotable arm 18 by means of a second pivot axle 19. The second pivotable arm 18 is connected to the upper plate 9 of the frame for the outer mould part 2 by means of a third pivot axle 20.

A third pivotable arm 21 is connected at one end to the same pivot axle 19 as the first and second pivotable arms 15, 18. The other end of the third pivotable arm 21 is received at the second servo-motor 14.

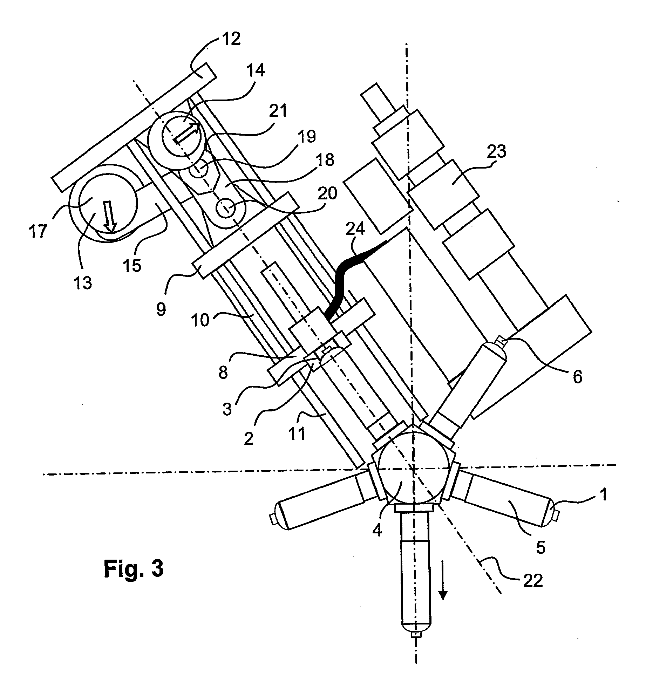

In the starting position for the first servo-motor 13, i.e. before rotation of the first servo-motor 13, the second pivotable arm 18 is inclined in relation to an imaginary line 22, see Fig. 2. The imaginary line 22 goes through the centre of the mould, crossing the pivot axle 20 between the second pivotable arm 18 and the upper plate 9 of the frame, crossing the shaft and eccentric of the second servo-motor 14 and through the centre of the mandrel wheel 4. When the first servo-motor 13 has been rotated to its end position, in which the mould is partly closed, see Fig. 3, the second pivotable arm 18 has been moved to a position in-line with the imaginary line 22, due to the arrangement of the first, second and third pivotal arms 15, 18, 21 and the first, second and third pivot axles 16, 19, 20. The third pivotable arm 21 is arranged in such a way that it also will be in-line with the second pivotable arm 18 and the imaginary line 22, when the first servo-motor 13 has reached its end position.

The second servo-motor 14 is furnished with an eccentric, which is to act on the third pivotable arm 21. The eccentric is formed on the rotating shaft of the second servo-motor 14 and the third pivotable arm 21 is received journalled in a roller bearing. As the second servo-motor 14 is driven first after that the first servo-motor 13 has reached its end position the eccentric of the second servo-motor 14 will act on a straight link mechanism.

Thus, the first servo-motor 13 co-operates with a knee-mechanism, in the form of the first, second and third pivotable arms 15, 18, 21, to partly close the mould. The second servo-motor 14 co-operates with an eccentric and the second and third pivotable arms 18, 21 to close and lock the mould with a high clamping force, compressing the plastic material inside the mould.

An extruder 23 is placed at the injection compression mechanism. A pipe 24 is arranged to lead plastic material from the extruder, via the channel(s) 3 of the outer mould part 2 and into the mould cavity 7 formed between the outer and inner mould parts 2, 1.

The embodiment as shown in the enclosed Figs. has the following work cycle. The mandrel wheel 4 has five equally spaced mandrels, each forming an inner mould part 1. The mandrel wheel 4 will be rotated or indexed a fifth of a full turn during each work cycle. Thus, each mandrel will subsequently occupy five different positions. In a first position a sleeve 5 is placed on the mandrel. In a second position a cap 6 is placed on the mandrel. In a third position a plastic top is moulded between the sleeve 5 and the cap 6. Thus, after that position the sleeve, the plastic top and the cap 6 form one unit. In a fourth position of the mandrel the formed unit is allowed to cool. In the fifth and last position the formed unit is released from the mandrel. The placement of parts on the mandrels and removing of the finished products are normally done in an automatic fashion. However, a person skilled in the art realises that it may also be performed at least partly manually. As this part does not have any importance for the present invention as such it will not be described further here.

At the start of a work cycle one mandrel, i.e. inner mould part 1, is placed in-line with the outer mould part 2. The inner mould part 1 holds a sleeve 5 and a cap 6. Then the first servo-motor 13 closes the mould, in that the outer mould part 2 is moved down towards the inner mould part 1, whereby the mould cavity 7 is formed. The movement of the first servo-motor 13 rotates the disc 17 holding a pivot axle 16 to which the first pivotable arm 15 is connected. By the movement of the first pivotable arm 15, also the second and third moveable arms 18, 21 will be moved. The first servo motor 13 will move the second and third arms 18, 21 to a position in which said arms 18, 21 will form a straight line in-line with the imaginary line 22. In that position the first servo-motor 13 is stopped, giving the end position of the first servo-motor 13, see Fig. 3.

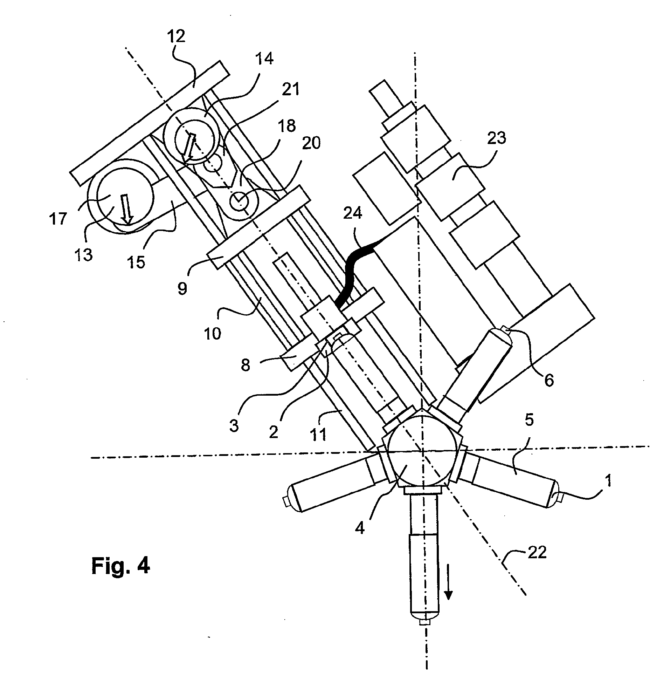

The next step of the work cycle is that the extruder 23 will inject plastic material into the mould cavity 7, via the pipe 24 and the channel 3 of the outer mould part 2. The injected plastic material will not fill the mould cavity 7 completely. Then the second servo-motor 14 will be rotated, whereby the eccentric connected to the second servo-motor 14 will act on the third pivotable arm 21 in such a way that the outer mould part 2 will be moved further towards the inner mould part 1, closing the mould, see Fig. 4. The second servo-motor 14 will be rotated about one third to one half of a full turn. This relatively long movement of the second servo-motor 14 translates to a movement of the outer mould part of only 1-2 mm, by means of the eccentric. This further movement of the outer mould part 2 will compress the injected plastic material in such a way that the material will fill out the mould cavity 7. With both servo-motors 13, 14 in the end positions the injected material is cooled. Thus, the cooling is performed under compression and is normally done from the inside of the mould.

After cooling the mould is opened in that the outer mould part 2 is lifted from the inner mould part 1, by means of at least the first servo-motor 13. Normally, the first and the second servo-motors 13, 14 are moved simultaneously. When both servo-motors 13, 14 are back in their starting positions the mandrel wheel 4 is indexed one fifth of a full turn. A new work cycle can now be started.

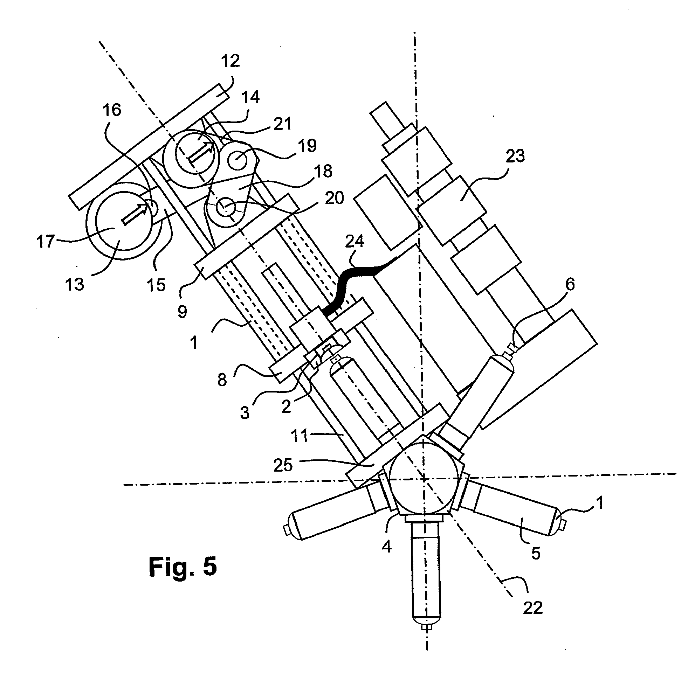

In Fig. 5 another embodiment of the present invention is shown, where the injection moulding mechanism is movably mounted on rails 11, which rails 11 are fastened at a base 25. This base 25 is located close to the mandrel wheel, which is mounted at a central hub. The injection moulding mechanism is attached to the support 12, at an upper end as seen in Fig. 5, via the knee-mechanism 18, 21. The rails are relatively long, in the order of 100-120 cm, and are formed to be slightly flexible. During normal operation, the force on the rails from the knee-mechanism is about 50 to 100 kN. At these loads, the rails should be designed to flex about 0.05 to 0.1 percent, which for a 100 cm long rail translates into 0.5 mm to 1 mm. This means that in order to compress the mould about 1 mm, the knee-mechanism must be extended about 1.5 to 2.0 mm, due to the flex of the rails. The flex of the rails 11 makes the setup of the injection moulding mechanism much easier, since overfilling of the mould will be compensated by said flexing. The rails 11 are at an outer end rigidly attached to the support 12 and are at an inner end rigidly attached to the base 25.

A further advantage of the flexing of the rails 11 appears when the injected plastic material in the mould 1, 2 is cooled. The plastic material will then shrink and will separate from the walls of a traditional moulding mechanism. The flexing of the rails 11 will, however, ensure that the mould 1, 2 is always in contact with the injected plastic material during cooling. This will also increase the speed of cooling, since the mould transfers heat from the plastic material more efficiently if being in contact with the entire plastic detail.

The long and relatively slender rails 11 will give the injection moulding mechanism another advantage. The outer mould part 2 is slightly movable in a lateral direction, in addition to the longitudinal direction given by the longitudinal flexing of the rails 11. This lateral movement is possible due to bending of the rails 11. The sideways movement will make the outer mould 2 self-aligning, since it will adjust to a force balance in the mould 1, 2. In compression moulding, where the injected plastic material enters the substantially open mould 1, 2 at two or more locations on the jacket 26 of the mould, see Fig. 1, the compression of the mould will create a force balance which will strive to ensure that the thickness of the finished plastic part is more or less uniform, despite of differences in injected amounts at different locations. This is possible if the mould parts 1, 2 are arranged such that they can move slightly in a lateral direction, and adjust to said force balance. By arranging the outer mould part 2 in a mechanism that is suspended on flexible rails 11, this is possible. The inner mould part 1 is connected to the mandrel wheel 4 and is more or less stationary. The maximum possible lateral movement of the injection moulding mechanism and hence the outer mould should be in the order of 0.5 to 1 mm (corresponding to 0.05 to 0.1 percent of the length of the rails 11 described above), when the injection moulding mechanism is subjected to normal forces of injection compression moulding. The above flexing refers to a location where the outer mould part 2 is mounted on the injection moulding mechanism, which is suspended on the rails 11, such that the outer mould part 2 can move a distance of about 0.5 to 1 mm in a lateral direction.

Both the longitudinal flexing and the lateral flexing should be adapted to the specific application. In the above cases, the flexing is about half the distance compared to the movement given by a second eccentric mechanism, i.e. if a movement given by the eccentric mechanism 14 in the longitudinal direction is about 1 mm, the flexing in the longitudinal direction will be about 0.5 mm. Other relationships between the movement in the longitudinal direction of the injection compression mechanism and the flexing of the rails 11 in the same direction are possible. The same applies for the lateral flexing of the rails 11.

A person skilled in the art realises that the exact form and design of the parts carrying the servo-motors 13, 14, the link system 15, 18, 21 and the outer mould part 2 may vary, as long as they fulfil the intended function.

## Claims

1. An injection moulding mechanism comprising an extruder (23), an inner mould part (1), an outer mould part (2), a first mechanism to partly close the mould and a second mechanism to close the mould and compress extruded material inside the mould, whereby one mould part (2) is arranged moveable towards the other mould part (1) to form a mould cavity (7) between the mould parts (1, 2) and one mould part (2) has one or more channels (3), opening into the mould cavity (7) and connected to the extruder (23), wherein the first mechanism, to partly close the mould, has a knee mechanism driven by a first servo-motor (13), **characterized in that** the second mechanism, to close and compress the extruded material inside the mould, has an eccentric being a part of the shaft of a second servo-motor, wherein the knee mechanism is formed of three pivotable arms (15, 18, 21), of which a first pivotable arm (15) at one end is connected by means of a first pivot axle (16) to a disc (17) rotated by the first servo-motor (13) and at the other end by a second pivot axle (19) to one end of the second pivotable arm (18), the second pivotable arm (18) being connected at its other end by means of a third pivot axle (20) to a frame carrying the outer mould part (2) and the third pivotable arm (21) being connected at one end to the second pivot axle (19), also connecting the first and second pivotable arms (15, 18) and at the other end being connected to a shaft of the second servo-motor (14).

2. The injection moulding mechanism of claim 1, **characterized in that** the frame carrying the outer mould part (2) is arranged moveable in a linear direction in such a way that the outer mould part (2) may be moved towards and away from the inner mould part (1) and that the frame is moved by means of rotation of the first servo-motor (13) being transferred to the frame by means of the knee-mechanism.

3. The injection moulding mechanism of claim 2, **characterized in that** the frame has one upper plate (9), to which the second pivotable arm (18) is mounted by means of the third pivot axle (20), one lower plate (8), carrying the outer mould part (2), and a number of rods (10) connecting the upper and lower plates (9, 8) and wherein the frame is received moveable on rails (11).

4. The injection moulding mechanism of claim 2, **characterized in that** in a starting position of the first servo-motor (13) the second pivotal arm (18) inclines in relation to an imaginary line (22), going through the centre of a mandrel wheel (4) and through the centre of the mould and crossing the third pivot axle (20) and the shaft of the second servo-motor (14).

5. The injection moulding mechanism of claim 4, **characterized in that** the second and third pivotable arms (18, 20) are arranged to be in-line with each other and with the imaginary line (22) at an end positon of the first servo-motor (13), in which position the mould is partly closed.

6. The injection moulding mechanism of claim 4, **characterized in that** the eccentric acts on the third pivotable arm (21) along the imaginary line (22).

7. The injection moulding mechanism of claim 4, **characterized in that** the inner mould part (1) has the form of a mandrel received on the mandrel wheel (4), having a number of mandrels projecting radially outwards on the mandrel wheel (4) and that the mandrel wheel (4) is rotated to place the mandrels in different positions during a work cycle.

8. The injection moulding mechanism of claim 7, **characterized in that** the mandrel wheel (4) has five mandrels, each forming an inner mould part (1).

9. The injection moulding mechanism of claim 7, **characterized in that** the extruded plastic material forms a top between a sleeve (5) of paper laminate and a cap (6), which sleeve (5) and cap (6) are placed in proper positions on one mandrel before the plastic material is injected and that it is used in the forming of packages for food products.

10. The injection moulding mechanism of claim 1, **characterized by** being suspended on rails (11), which are designed to flex 0.05 to 0.1 percent in a longitudinal direction when being subjected to normal compression forces of compression injection moulding.

11. The injection moulding mechanism of claim 1, **characterized by** being suspended on rails (11), which are designed to flex 0.5 to 1 percent in a lateral direction, at the location of the outer mould part (2), perpendicular to the longitudinal direction of the rails (11), such that the outer mould part (2) is laterally movable in relation to the inner mould part (1), which is substantially stationary, when being subjected to normal compression forces of compression injection moulding.

## Patentansprüche

1. Spritzgießmechanismus, umfassend:
einen Extruder (23),
ein inneres Formteil (1),
ein äußeres Formteil (2),
einen ersten Mechanismus zum teilweise Schließen der Form und
einen zweiten Mechanismus zum Schließen der Form und zum Zusammendrücken von extrudiertem Material innerhalb der Form,
wobei ein Formteil (2) beweglich zu dem anderen Formteil (1) zum Formen eines Formhohlraums (7) zwischen den Formteilen (1, 2) angeordnet ist und ein Formteil (2) einen oder mehrere Kanäle (3) aufweist,
die sich in den Formhohlraum (7) öffnen und mit dem Extruder (23) verbunden sind,
wobei der erste Mechanismus zum teilweise Schließen der Form einen Kniemechanismus aufweist, der von einem ersten Servomotor (13) angetrieben wird,
**dadurch gekennzeichnet, dass**
der zweite Mechanismus zum Schließen und Zusammendrücken des extrudierten Materials innerhalb der Form einen Exzenter aufweist, der Teil einer Welle eines zweiten Servomotors ist,
wobei der Kniemechanismus aus drei drehbaren Armen (15, 18, 21) geformt wird, von denen ein erster drehbarer Arm (12) an einem Ende über Mittel einer ersten Drehachse (16) mit einer Scheibe (17), die von dem ersten Servomotor (13) gedreht wird, und am anderen Ende von einer zweiten Drehachse (19) mit einem Ende des zweiten Dreharms (18) verbunden ist,
wobei der zweite Dreharm (18) an seinem anderen Ende über eine dritte Drehachse (20) mit einem Rahmen verbunden ist, der das äußere Formteil (2) trägt und der dritte Dreharm (21) an einem Ende mit der zweiten Drehachse (19) verbunden ist, die auch den ersten und den zweiten Dreharm (15, 18) verbindet, und am anderen Ende mit einer Welle des zweiten Servomotors (14) verbunden ist.

2. Spritzgießmechanismus nach Anspruch 1,
**dadurch gekennzeichnet, dass**
der Rahmen, der das äußere Formteil (2) trägt, beweglich in linearer Richtung derart angeordnet ist, dass das äußere Formteil (2) zu dem inneren Formteil (1) hin und davon weg bewegt werden kann, und dadurch, dass der Rahmen mittels Drehung des ersten Servomotors (13), die über den Kniemechanismus auf den Rahmen übertragen wird, bewegt wird.

3. Spritzgießmechanismus nach Anspruch 2,
**dadurch gekennzeichnet, dass**
der Rahmen eine obere Platte (9) aufweist, an der ein zweiter Dreharm (18) über die dritte Drehachse (20) befestigt ist, wobei eine untere Platte (8) das äußere Formteil (2) und eine Reihe von Stangen (10) trägt, welche die oberen und unteren Platten (9, 8) verbindet, wobei der Rahmen beweglich auf Schienen (11) angeordnet ist.

4. Spritzgießmechanismus nach Anspruch 2,
**dadurch gekennzeichnet, dass**
sich bei einer Startposition des ersten Servomotors (13) der zweite Dreharm (18) in Bezug auf eine imaginäre Linie (22), die durch die Mitte eines Dornrades (4) und durch die Mitte der Form läuft, neigt, und die dritte Drehachse (20) und die Welle des zweiten Servomotors (14) überschneidet.

5. Spritzgießmechanismus nach Anspruch 4,
**dadurch gekennzeichnet, dass**
der zweite und der dritte Dreharm (18, 20) auf einer Linie miteinander angeordnet sind, wobei sich die imaginäre Linie (22) an einer Endposition des ersten Servomotors (13) befindet, in der die Form teilweise geschlossen ist.

6. Spritzgießmechanismus nach Anspruch 4,
**dadurch gekennzeichnet, dass**
der Exzenter an dem dritten Dreharm (21) entlang der imaginären Linie (22) wirkt.

7. Spritzgießmechanismus nach Anspruch 4,
**dadurch gekennzeichnet, dass**
das innere Formteil (1) die Form eines Dorns aufweist, der in dem Dornrad (4) aufgenommen ist und eine Reihe von Dornen aufweist, die radial nach außen von dem Dornrad (4) herausragen, und dadurch, dass das Dornrad (4) zum Anordnen der Dorne in unterschiedlichen Positionen während eines Arbeitszyklus gedreht wird.

8. Spritzgießmechanismus nach Anspruch 7,
**dadurch gekennzeichnet, dass**
das Dornrad (4) fünf Dorne aufweist, die jeweils ein inneres Formteil (1) bilden.

9. Spritzgießmechanismus nach Anspruch 7,
**dadurch gekennzeichnet, dass** das extrudierte Kunststoffmaterial einen Oberseite zwischen einer Hülse (5) aus Papierlaminat und einer Kappe (6) bildet, wobei die Hülse (5) und die Kappe (6) an angemessenen Positionen auf einem Dorn angeordnet sind, bevor das Kunststoffmaterial eingespritzt wird, und dadurch, dass dies beim Formen von Lebensmittelverpackungen verwendet wird.

10. Spritzgießmechanismus nach Anspruch 1,
**gekennzeichnet dadurch, dass**
dieser an Schienen (11) aufgehängt ist, die zum Biegen mit 0,05 bis 0,1 Prozent in Längsrichtung ausgestaltet sind, wenn sie normalen Kompressionskräften des Spritzprägens ausgesetzt werden.

11. Spritzgießmechanismus nach Anspruch 1,
**gekennzeichnet dadurch, dass**
dieser an Schienen (11) aufgehängt ist, die zum Biegen mit 0,5 bis 1 Prozent in seitliche Richtung ausgestaltet sind, an einer Stelle des äußeren Formteils (2), die senkrecht zu der Längsrichtung der Schienen (11) ist, sodass das äußere Formteil (2) seitlich in Bezug auf das innere Formteil (1) beweglich ist, das im Wesentlichen stationär ist, wenn es normalen Kompressionskräften des Spritzprägens ausgesetzt wird.

## Revendications

1. Mécanisme de moulage par injection comprenant une extrudeuse (23), une partie de moule interne (1), une partie de moule externe (2), un premier mécanisme pour fermer en partie le moule et un deuxième mécanisme pour fermer le moule et comprimer le matériau extrudé à l'intérieur du moule, une partie de moule (2) étant disposée de manière mobile vers l'autre partie de moule (1) pour former une cavité de moule (7) entre les parties de moule (1, 2) et une partie de moule (2) ayant un ou plusieurs canaux (3), s'ouvrant dans la cavité de moule (7) et connectés à l'extrudeuse (23), le premier mécanisme, afin de fermer partiellement le moule, présentant un mécanisme de genouillère entraîné par un premier servomoteur (13), **caractérisé en ce que** le deuxième mécanisme, pour fermer et comprimer le matériau extrudé à l'intérieur du moule, présente un excentrique faisant partie de l'arbre d'un deuxième servomoteur, le mécanisme de genouillère étant formé de trois bras pivotants (15, 18, 21), dont un premier bras pivotant (15) est relié à une extrémité au moyen d'un premier axe de pivot (16) à un disque (17) entraîné en rotation par le premier servomoteur (13) et à l'autre extrémité par un deuxième axe de pivot (19) à une extrémité du deuxième bras pivotant (18), le deuxième bras pivotant (18) étant raccordé à son autre extrémité au moyen d'un troisième axe de pivot (20) à un cadre portant la partie de moule externe (2) et le troisième bras pivotant (21) étant raccordé à une extrémité au deuxième axe de pivot (19), raccordant également le premier et le deuxième bras pivotant (15, 18) et à l'autre extrémité étant raccordé à un arbre du deuxième servomoteur (14).

2. Mécanisme de moulage par injection selon la revendication 1, **caractérisé en ce que** le cadre portant la partie de moule externe (2) est disposé de manière mobile dans une direction linéaire de telle sorte que la partie de moule externe (2) puisse être déplacée vers et depuis la partie de moule interne (1) et **en ce que** le cadre est déplacé au moyen d'une rotation du premier servomoteur (13) transférée au cadre par le biais du mécanisme de genouillère.

3. Mécanisme de moulage par injection selon la revendication 2, **caractérisé en ce que** le cadre présente une plaque supérieure (9), sur laquelle est monté le deuxième bras pivotant (18) au moyen du troisième axe de pivot (20), une plaque inférieure (8), portant la partie de moule externe (2), et un certain nombre de tiges (10) reliant les plaques supérieure et inférieure (9, 8), et dans lequel le cadre est reçu de manière mobile sur des rails (11).

4. Mécanisme de moulage par injection selon la revendication 2, **caractérisé en ce que**, dans une position initiale du premier servomoteur (13), le deuxième bras pivotant (18) est incliné par rapport à une ligne imaginaire (22), traversant le centre d'une roue à mandrin (4) et le centre du moule et croisant le troisième axe de pivot (20) et l'arbre du deuxième servomoteur (14).

5. Mécanisme de moulage par injection selon la revendication 4, **caractérisé en ce que** le deuxième et le troisième bras pivotant (18, 20) sont agencés de manière à être alignés l'un avec l'autre et avec la ligne imaginaire (22) en une position d'extrémité du premier servomoteur (13), dans laquelle position le moule est partiellement fermé.

6. Mécanisme de moulage par injection selon la revendication 4, **caractérisé en ce que** l'excentrique agit sur le troisième bras pivotant (21) le long de la ligne imaginaire (22).

7. Mécanisme de moulage par injection selon la revendication 4, **caractérisé en ce que** la partie de moule interne (1) présente la forme d'un mandrin reçu sur la roue à mandrin (4), ayant un certain nombre de mandrins faisant saillie radialement vers l'extérieur sur la roue à mandrin (4) et **en ce que** la roue à mandrin (4) est tournée afin de placer les mandrins dans différentes positions au cours d'un cycle de travail.

8. Mécanisme de moulage par injection selon la revendication 7, **caractérisé en ce que** la roue à mandrin (4) présente cinq mandrins, chacun formant une partie de moule interne (1).

9. Mécanisme de moulage par injection selon la revendication 7, **caractérisé en ce que** le matériau en plastique extrudé forme un dessus entre un manchon (5) en papier stratifié et un capuchon (6), lequel manchon (5) et lequel capuchon (6) sont placés dans des positions correctes sur un mandrin avant que le matériau en plastique soit injecté et **en ce qu'**il est utilisé pour la formation d'emballage de produits alimentaires.

10. Mécanisme de moulage par injection selon la revendication 1, **caractérisé en ce qu'**il est suspendu sur des rails (11) qui sont conçus pour fléchir de 0,05 à 0,1 % dans une direction longitudinale lorsqu'ils sont soumis à des forces de compression normales de moulage par injection par compression.

11. Mécanisme de moulage par injection selon la revendication 1, **caractérisé en ce qu'**il est suspendu sur des rails (11) qui sont conçus pour fléchir de 0,5 à 1 % dans une direction latérale, à l'emplacement de la partie de moule externe (2), perpendiculairement à la direction longitudinale des rails (11), de telle sorte que la partie de moule externe (2) puisse être déplacée latéralement par rapport à la partie de moule interne (1), qui est substantiellement stationnaire, lorsque qu'ils sont soumis à des forces de compression normales de moulage par injection par compression.
